# EUROPEAN PATENT SPECIFICATION

(11) **EP 3 892 171 B1**
(45) Date of publication and mention of the grant of the patent: **23.04.2025**
(21) Application number: 21167042.7
(22) Date of filing: 06.04.2021
(51) Int. Cl.: A47J 37/07, A47J 37/06

(54) **COOKING APPLIANCE**
KOCHGERÄT
APPAREIL DE CUISSON

(30) Priority: 06.04.2020 AU 2020901078; 10.05.2020 US 202063022575 P; 15.05.2020 AU 2020901576; 29.01.2021 US 202117161897
(43) Date of publication of application: 13.10.2021
(73) Proprietor: Dumenil, Malcolm Ralph, Kowloon (HK)
(72) Inventor: Dumenil, Malcolm Ralph, Kowloon (HK)
(74) Representative: Marks & Clerk LLP

(56) References cited:
- DE-A1- 2 516 906
- DE-A1- 2 709 326
- DE-U1- 202012 006 160
- IT-A1- VR20 080 142
- US-A1- 2005 247 210
- US-A1- 2018 073 739
- US-B2- 8 445 820

## Description

### Technical Field

The invention relates to cooking appliances.

### Background

Cooking appliances such as grills and barbeque cooking appliances are commonly used for cooking food.

DE2516906 (COZZIO SEVERIN) relates to an easily converted griller and fryer - having an indirectly heated hot plate resting on bottom plate for frying purposes. According to the abstract of this document the combined frying and grilling apparatus comprises two hot plates which are mounted in movable holders, the upper hot plate which is heated indirectly by a heat radiation source, designed to engage on the upper holder acting as a contact grill in conjunction with the lower heated hot plate. On disengaging the upper hot plate from its holder it can be placed on the lower hot plate so that when raising the upper holder the heat radiation source for the upper plate serves as a mechanism for frying the food which is placed on the back of the upper hot plate. The heat radiation source for the upper hot plate preferably consists of gas pipes with several jets which serve as the burner and heat up the wire or metal mesh which faces the reverse side of the upper hot plate. The lower hot plate can be heated directly by a flat gas burner.

DE2709326 (MORITZ JEAN MARC) relates to a combined outdoor cooker, grill and heater - having two housing hinged together, containing heat sources, fitted with adjusting frame. According to the abstract of this document the combined cooker, grill and heating appliance is for outdoor use, and consists of two stands formed as housings, which are hinged to each other. Each housing has a heat source one of them having telescopic feet. The housings may be adjusted relative to each other by a frame. The housings may have a container, for cooking purposes and a grill plate, both being fastened via rapid connections. Opposite sides of the housings have recesses to hold a grate, for cooking. The adjustment frame consists of a U-shaped rod, with arms, fastened to it.

DE202012006160U (MEIDER ALEXANDER) relates to a Charcoal-electric combination grill. According to the abstract of this document the charcoal-electric combi grill allows the user to heat with charcoal or electric, characterized in that the grill chamber contains features and elements of two different heating variants (charcoal and electric) through its construction. The detachability of all parts facilitates the use of each of the two heating variants.

### Summary

Aspects disclosed herein relate to cooking appliances, such as barbeque cooking appliances and grills, which may be used outdoors and/or indoors. Some aspects relate to multi-fuel barbecue grill.

Some barbeque cooking appliances have a gas operated portion of the grill area on one end, and an electric powered other portion of the cooking surface on the other end.

It has been found that a limitation of mains powered electrical appliances, especially in locales where the supply voltage is lower (such as 120V in the USA), that the maximum allowable power allowed to be drawn from a single outlet or circuit is, in practical terms, about 1600 watts. In 230-240 Volt countries approx. 2300 watts is allowable. In the barbeque cooking appliance setting, this limitation (either at 120V or to a lesser extent 240V) effectively limits the maximum cooking area of an electric barbeque cooking appliance. It has been noticed that above a certain size, the cooking performance deteriorates rapidly because the temperature to sear and caramelize meat/food is above the peak temperature attainable by spreading 1600 watts over a large area. It has been found that small gas grills generally have available about 2KW or 7.4 MJ (7000 BTU's) of energy per 0.09 square meters (square foot) of cooking area 21.5 KW/square meter (2KW/sq.ft). It has also been found that electric grills of the same practical size are limited to 10.8 to 15.1 KW/square meter (1-1.4KW/sq. ft.) ((40 to 50 MJ/square meter) 3500-4500 BTU's /sq.ft). Electrical grills can therefore be seen to be less energy intensive than gas, and the cooking results by most reports are in line with this disparity in available energy.

Ribbing, plus insulation of the cooking chamber and lid, are other techniques used in an effort to conserve as much energy as possible to allow optimization of the size of the cooking area. The char lines limit how many watts/BTU's are needed to get some char lines and flavor into the food, meat in particular. To char the meat over a wider area would take more power.

According to the invention there is provided a cooking appliance as set forth in the appended claims.

Further aspects and embodiments of the invention will become apparent from the following description and the appended drawings which are given by way of example only to illustrate the invention(s). The scope of the invention is defined by the claims.

### Brief description of the drawings

Figure 1 is a front perspective view of a first type of multi-fuel barbecue, not forming part of the claimed invention,
Figure 2 is a front perspective view of a second type of multi-fuel barbecue according to one aspect of the invention,
Figure 3 schematically illustrates a multi-fuel cooking appliance, not forming part of the claimed invention,
Figure 3A schematically illustrates a further multi-fuel cooking member for the multi-fuel cooking appliance of Figure 3,
Figure 4 schematically illustrates a first configuration of the multi-fuel cooking appliance of Figure 3,
Figure 5 schematically illustrates a second configuration of the multi-fuel cooking appliance of Figure 3,
Figure 6 is a rear perspective view of the multi-fuel barbecue of Figure 1,
Figure 7 is a rear view of the multi-fuel barbecue of Figure 1 showing a ventilation door in the rear panel of the barbecue cart,
Figure 8 shows a cooking chamber of the multi-fuel barbecue of Figure 1,
Figure 9 is a first side perspective view of a rotatable cooking, not forming part of the claimed invention,
Figure 10 is a second side perspective view of the rotatable cooking unit of Figure 9,
Figure 11 illustrates a manner of arranging the rotatable cooking unit in a cooking chamber,
Figure 12 is an end view of the multi-fuel barbecue showing the hub portion of the rotatable cooking unit,
Figure 13 illustrates the cooking chamber and cooking unit in a first cooking mode of the multi-fuel barbecue of Figure 12,
Figure 14 illustrates the cooking chamber and cooking unit in a second cooking mode of the multi-fuel barbecue of Figure 12,
Figure 15 illustrates a container for a third cooking mode of the multi-fuel barbecue of Figure 12,
Figure 16 illustrates the cooking chamber and container of Figure 15 in a third cooking mode of the multi-fuel barbecue of Figure 12,
Figure 17 illustrates a ventilation or flue arrangement of the cooking chamber hub in the third cooking mode of the multi-fuel barbecue of Figure 12,
Figure 18 is an end section schematic illustration of a clamshell or contact type cooking appliance according to an aspect of the invention,
Figure 19 is a schematic illustration of the contact type cooking appliance of Figure 18 in a partially open configuration,
Figure 20 is an illustration of the contact type cooking appliance of Figure 18 in a 180-degree open configuration,
Figure 21 is a front perspective view a first type of multi-fuel barbecue according to an aspect of the invention,
Figure 22 is a front perspective view the multi-fuel barbecue of Figure 21 in a 180-degree open configuration,
Figure 23 is a front perspective view a first type of multi-fuel barbecue in a 180-degree open configuration,
Figure 24 is a front perspective view a first type of multi-fuel barbecue in a 180-degree open configuration,
Figure 25 is a front perspective view a second type of multi-fuel barbecue according to an aspect of the invention,
Figure 26 is a front perspective view the multi-fuel barbecue of Figure 25 in a 90-degree open configuration,
Figure 27 is a plan illustration of a gas and/or electric multi-fuel barbecue according to an aspect of the invention,
Figure 28 is a section illustration of the cooking chamber of the appliance of Figure 27,
Figure 29 is a section illustration of a vertical type gas and/or electric cooking appliance, not forming part of the claimed invention,
Figure 30 is a section view through a gas burner element suitable for use in aspects of the invention,
Figure 31 is a schematic illustration of control aspects of a gas only or gas and electric cooking appliance suitable for use in aspects of the invention,
Figure 32 is an illustration of the control of supply of differential amounts of energy to two separate cooking plates,
Figure 33 is a schematic illustration of a control knob for operating an energy supply according to Figure 32,
Figure 34 shows a combination gas and electric cooking appliance,
Figure 35 shows a cooking appliance in one embodiment not forming part of the claimed invention,
Figure 36 shows a cooking appliance in one embodiment not forming part of the invention,
Figure 37 shows a cooking appliance in one embodiment not forming part of the invention,
Figure 38 shows a cooking appliance in one embodiment of the invention,
Figure 39 shows a cooking appliance in one embodiment of the invention,
Figure 40 shows a cooking appliance in one embodiment of the invention, and
Figure 41 shows the cooking appliance of Figure 40 in a closed configuration.

### Description of the invention

Cooking appliances and grills, such as barbeque cooking appliances and the like, are useable. These are normally gas or mains electric powered. They may have open slat grills or flat griddles or a mixture of both with electric radiant elements or open gas burners mounted below the grill plate to cook food placed above by radiation and convection. In some alterations, the elements, gas or electric, are placed above the grill plate and radiate energy down onto the food from above. Another different type sees the electric elements mounted vertically on each side of the food holder and radiate energy laterally.

Another different type (but again within the general grill category) is the direct contact clamshell type grill (that are based loosely on toasted-sandwich grills) that cooks food from the top and bottom simultaneously, by virtue of generally an upper electrically heated lid mounted grill plate hingedly connected to a lower body with its own electrically heated plate. The plates are typically solid metal type, flat or ribbed, but rely mainly on heat conduction for cooking. Food (such as beef steak) is compressed between the heated lid plate and the heated bottom plate and is rapid seared and heated from both sides. This simultaneously seals two surfaces of the food and provides good cooking results. The clamshell type grill as described above may alternatively utilize open radiation type glowing electric elements and not heated platens.

As mentioned above, there are useable designs that cook food in a vertical condition such as "vertical grills". These typically have an electrically powered heat source on each side and the food is disposed between the heat sources in a removable rack and cooked by radiation. Liberated fat and water baste the food as they run down over the food and are collected in a lower fat tray.

It can be seen that there are many and varied designs of cooking appliances, such as grills and barbeque cooking appliances, may be powered by gas or electric means. Some of them use gas heating tubes or elements powered either from large liquified gas bottles in the 0.5Kg to 10Kg to 100lb range, or from reticulated (e.g. natural) gas. Some others are designed to also accept "disposable", small, pressurized cans of butane and/or propane, which are deemed to be safer in a building or vehicle than bulk supply cylinders and present less hazard if used indoors or in recreational vehicles in areas where regulations allow.

Alternatively, cooking appliances may be heated by electric elements that are powered by mains 120-volt AC supply or mains 240-volt AC supply via a mains power cord.

Some of these cooking appliances are "portable" in that they can be used at home or in caravans or when camping for instance. Some of them are intended to be used mainly at home and are on trolleys or leg sets and are movable.

Some of these cooking appliances are single fuel appliances, being gas or electric. This may cause a cost to the purchaser and other inconveniences in that for example, a gas barbeque cooking appliance is purchased to use during camping or outdoors cannot be used indoors at home or in a caravan or other recreational vehicle. If used outside and gas supply runs out, the appliance will not be useable. Similarly, an electric unit can only be used where there is power available.

Various aspects of the invention will now be described with reference to the accompanying drawings which are given by way of example only to illustrate the invention. It is to be understood that the terminology used herein is for descriptive purposes only and is not limiting to any aspect of the invention. Further it should be understood that the invention may be practiced in different ways and embodiments and the following description should not be limiting on any aspect of the invention. Where the context requires, the term "grill" is to be construed as meaning a form of cooking in which heat, and in particular dry heat, is applied directly to a surface of food to cook the food quickly, or to a cooking device used to cook food by applying heat, and in particular dry heat, is directly to a surface of the food. The term "fuel" refers to the type of fuel or energy source used to generate heat for the cooking appliance such as gas, electricity or solid fuels such as charcoal and the like.

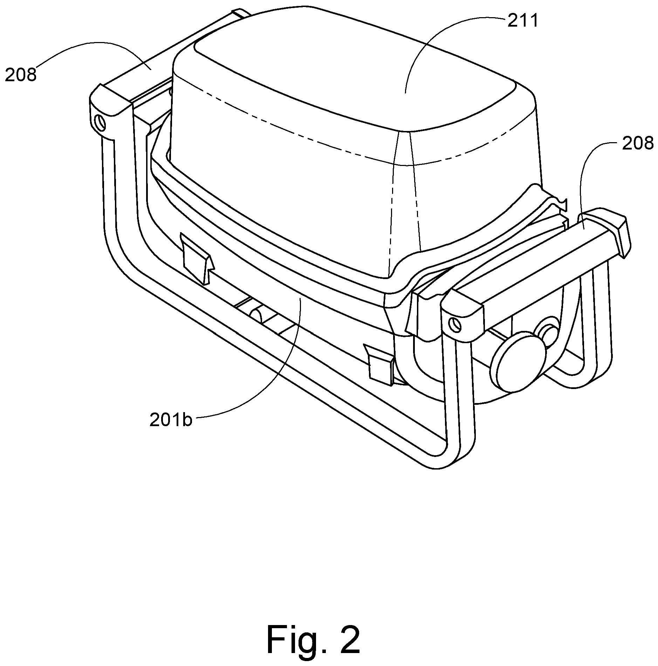

Referring to Figures 2 to 5 there is shown is a schematic illustration of one embodiment of a modular multi-fuel cooking appliance. While the illustration is a modular three-mode hybrid grill, it should be appreciated that embodiments of the invention may embrace only two modes or more than three modes, such as for example a gas and electric, or gas and coal, or electric and coal dual-fuel barbeque cooking appliance. In this embodiment an outer cooking chamber 201b is provided to accommodate one of a plurality of interchangeable cooking modules A, B, C, D and E. The outer cooking chamber has a plurality of feet 207 for supporting it on the ground or a supporting surface. The interchangeable cooking modules A, B, C, D, E comprise an inner cooking module member 201 each of which has different heat generating fuel means. By interchanging the cooking modules A, B, C, D, E with the outer cooking chamber 201b a user can customize the cooking appliance for different cooking fuels. The outer cooking chamber 201b includes a base and a plurality of enclosing sidewalls extending up from the base. At least one, and preferably two, of the sidewalls is provided with a rib or protrusion 202b on which can be supported one of the interchangeable cooking modules A, B, C, D, E. The base of outer cooking chamber 201b includes an opening 206a into, or below, which a drip tray 206 is accommodated for catching oils, fats, or fluids released from food during cooking.

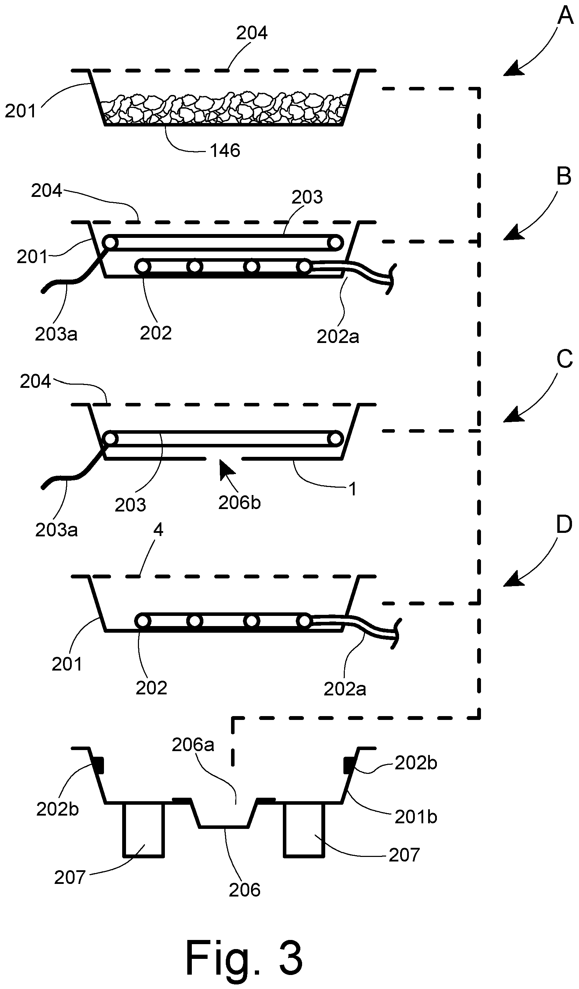

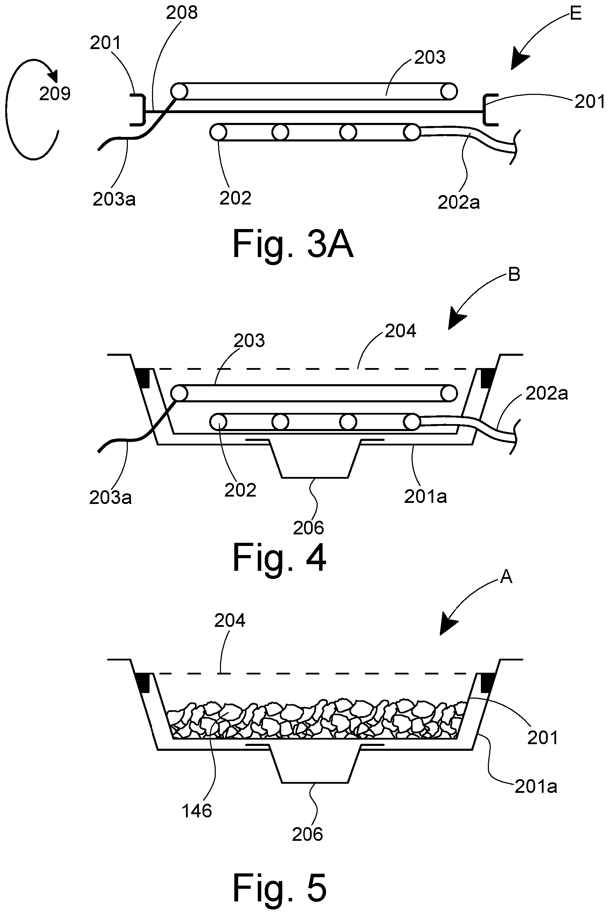

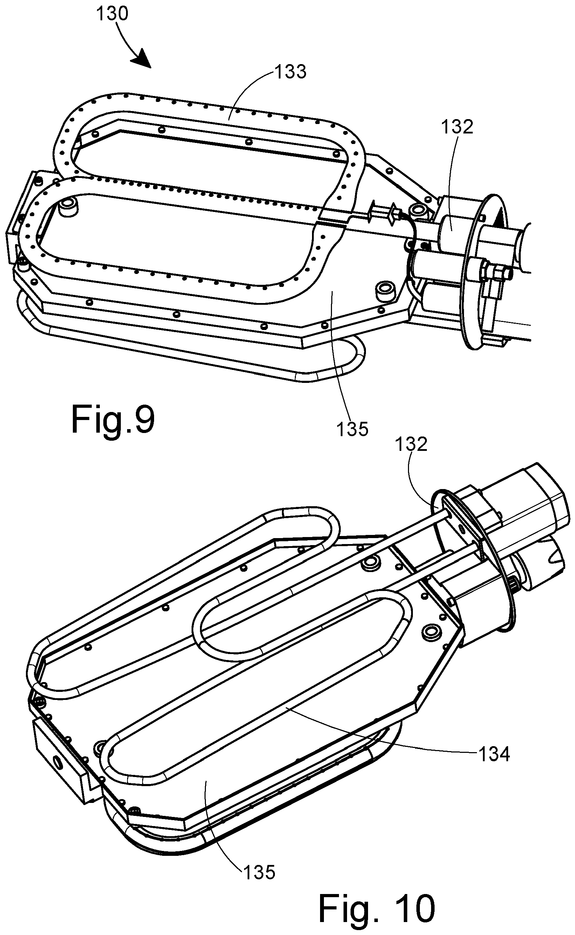

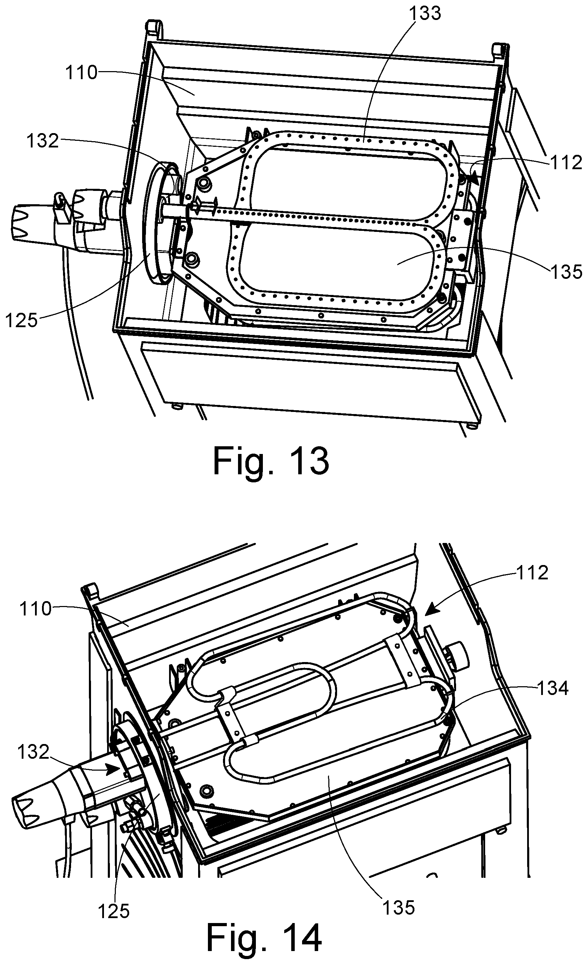

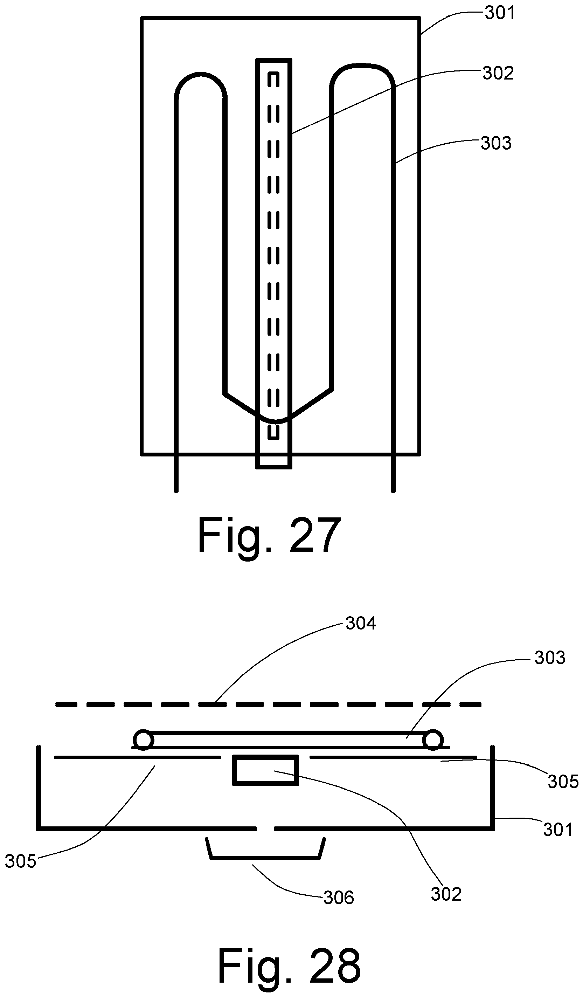

Each of the interchangeable cooking modules A, B, C, D, E comprises an inner cooking module member 201 and a grill plate cooking surface 204. The grill plate cooking surface 204 may form a part of the interchangeable cooking module or may be removably supported above the inner cooking module member 201 such that the grill plate cooking surface is itself interchangeable between different ones of the cooking modules. The cooking modules A, B, C, D, E are preferably interchangeably supported with the outer cooking chamber 201b by the rib or protrusion 202b such that the cooking appliance may be configured to operate with different kinds of cooking fuel, such as for example gas, electric, or hot charcoal (coals) as desired by the user. In a first interchangeable cooking module A, the inner cooking member 201 is adapted to accommodate coals 146 such that the cooking appliance can be configured for cooking over hot coals as shown in Figure 3. In a second example of an interchangeable cooking module B, the inner cooking member 201 is provided with an electric cooking element 203 and a gas cooking element 202 in a single-sided linear configuration as will be described with reference to Figure 27. As shown in Figure 4 by arranging the second interchangeable cooking module B to be supported with outer cooking chamber 201b the cooking appliance can be configured as a dual-fuel electric/gas cooking appliance. The outer cooking chamber 201b is provided with slots or openings in its sidewalls to accommodate an electric power cord 203a or gas line 202a as required. The advantage of the second interchangeable cooking module B being of a dual-fuel electric/gas type is that only two interchangeable cooking modules A, B are required for the multi-fuel cooking appliance to be configured with three cooking fuels of electric, gas, hot coals. Alternatively to the a single-sided linear configuration multi-fuel cooking module, a dual-fuel rotatable cooking unit as described with reference to Figures 9 to 14 and/or as described in United States patent publication no. US2018073739 published on 15 March 2018 may be used within the outer cooking chamber 201b. In yet a further embodiment, an invertible dual fuel cooking module E may be used may be used within the outer cooking chamber 201b. Referring to Figure 3A, an invertible dual fuel cooking module E includes an inner cooking module member 201 supporting a first electric cooking fuel mode 203 and a second cooking fuel mode 202 spaced apart by 180-degrees. The inner cooking module member 201 also supports a reflector 208 interposed between and delimiting the cooking fuel modes 202, 203. The invertible dual fuel cooking module E is swapped between a gas cooking mode and an electric cooking mode (or vice versa) by removing the cooking module E from the outer cooking chamber 201b, flipping or inverting the cooking module E 180 degrees as illustrated by arrow 209, and then replacing the cooking module E with the opposite fuel mode in the upper operable orientation.

In some embodiments it may be desirable for the multi-fuel cooking appliance to be configured solely as a gas cooking appliance, or solely as an electric cooking appliance. Accordingly, in some embodiments there may be provided an interchangeable cooking module C that is provided solely with an electric cooking element 203, or another embodiment of the interchangeable cooking module D to be provided only with a gas element 202. In any one of the aforementioned embodiments of the interchangeable cooking module A, B, C, D, E, the inner cooking member 201 may be a simple supporting frame or may include an inner base and inner side walls to form an inner cooking chamber. Such an inner cooking chamber embodiment may optionally include an opening 206b arranged to communicate with opening 206a and drip tray 206 when the cooking chamber 201 is accommodated for use with the outer cooking chamber 201b.

In one embodiment it is anticipated that the inner cooking member 201 is a simple supporting frame supporting the electric or gas or combination electric/gas cooking elements 202, 203 and may be removably accommodated directly within the outer cooking chamber 201b without its own separate inner cooking chamber. The cooking elements 202, 203 may be removed and replaced with an inner cooking chamber for accommodating hot coals 146. In yet further embodiments it is anticipated that the hot coals 146 may be placed directly in the outer cooking chamber without the need for an inner cooking chamber to accommodate the hot coals. It is recognized however that cooking with hot coals directly in the outer cooking chamber 201b will increase the rate of deterioration of the outer cooking chamber 201b and thus the lifespan of the multi-fuel cooking appliance.

The depiction of gas burners and electric elements are for illustration purpose only, and a number of varieties of burners or elements may be substituted in any configuration without departing from the scope of the invention.

In some embodiments, the cooking modules A, B, C, D, E may be not interchangeable. In some embodiments, the cooking modules A, B, C, D, E are arranged in such a way that one cooking module of the cooking modules A, B, C, D, E is coupled to the lid 211 whereas another one of the cooking modules A, B, C, D, E is coupled to the base. The two modules are preferably of different types.

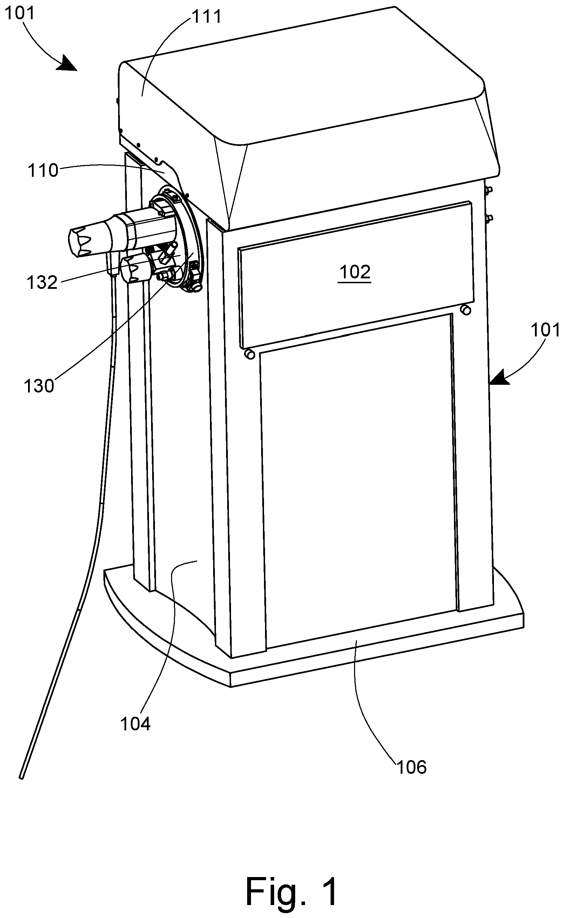

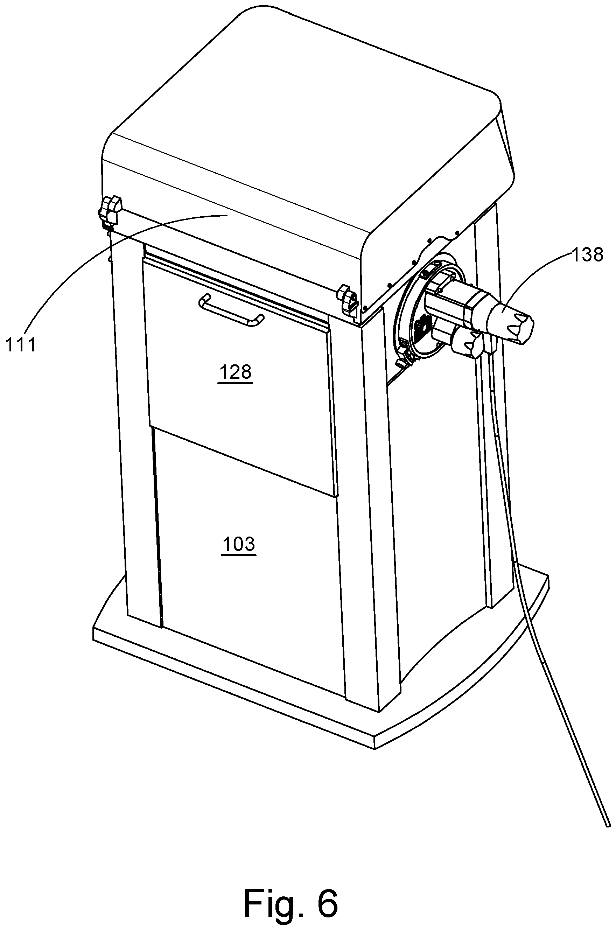

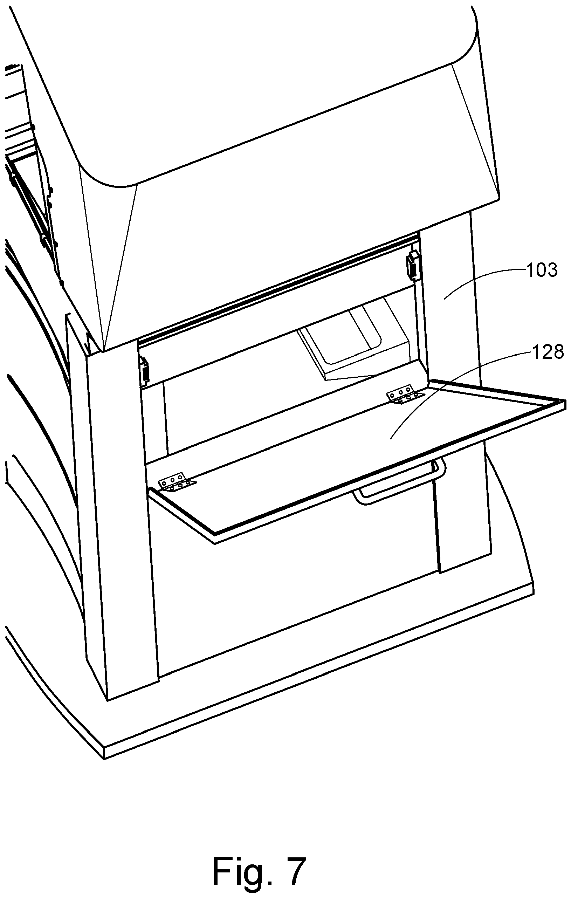

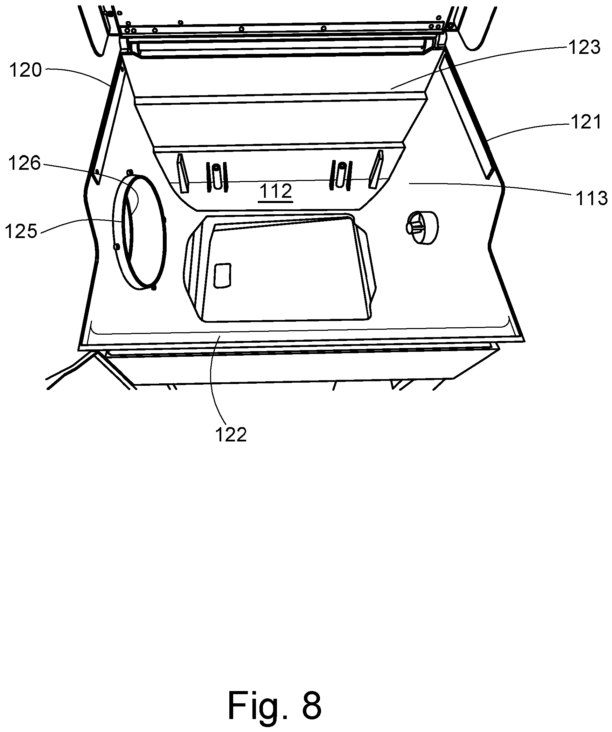

Referring now to Figures 1 and 6 to 17, there shown is a barbecue grill assembly 101 with a support frame assembly including a base 106, front frame member 102 extending vertically from the base 106, a rear frame member 103 extending vertically from the base 106, and a pair of side frame members 104, 105 that connects the front and rear frame members 102, 103. The base 106 may be supported on feet or wheels or a combination of feet and wheels. The barbecue grill assembly 101 further comprises a cooking chamber 110 supported on the support frame assembly. The cooking chamber 110 including at least a first pair of opposing side walls 120, 121 and a second pair of opposing side walls 122, 123. The pairs of side walls define an opening 113 into an interior space 112 of the cooking chamber 110. A cover or lid 111 is hingeably connected to a rear one 123 of the second pair of side walls of the cooking chamber. The lower edges of at least one of the first or second pairs of opposed side walls 120, 121, 122, 123 comprises mounting features that engages a limited extent with corresponding frame members 102, 103, 104,105 when the cooking chamber 110 is connected to the support frame assembly. In one end of the cooking chamber is a receiver hub assembly 125 with an opening 126 for interchangeably receiving a receivable hub 132 of a dual-fuel rotatable cooking unit 130 described with reference to Figures 9 to 14, or a single fuel cooking unit such as electric cooking element 203 and a gas cooking element 202 described with reference to Figures 3 to 5. The receiver hub assembly opening 126 may also accommodate a variable vent or flue unit 127. An optional door 128 may be provided in the rear frame member 103, as illustrated in Figures 6 and 7, to provide additional ventilation of the grill unit. The optional door 128, if provided, can be opened to provide ventilation for gas or charcoal (hereinafter just coal) cooking as necessary, but closed for, say, an electric cooking mode. The front, rear, left and right side members 102-105 may be double walled frame members for heat insulation. The double walled frame members 102-105 include heat resistant insulation between the double wall skins. The cooking chamber walls 120-123 and cover 111 may also comprise double walled members with or without insulation for heat insulation.

Referring to Figures 9 to 14, the dual-fuel rotatable cooking unit 130 may be of a type described in US2018073739 In this specific example the dual-fuel rotatable cooking unit 130 has at least a first cooking mode 133 and a second cooking mode 134, spaced apart by 180-degrees, and a reflector 135 interposed between and delimiting the cooking modes 133, 134. The reflector 135 is movably located between the two cooking modes 133, 134 and has a drip hole formed centrally. The reflector 135 has a first and second reflective surfaces and it may have a straight profile, or a curved profile which is beneficial for enhancing heat radiation. In Figure 9, the first cooking mode consists of a first cooking mode element, which is a gas heating element 133 that is connected with the gas regulator 136 of the receivable hub 132. The second cooking mode consists of a second cooking mode element, which is an electric heating element 134 that is connected with the electrical power inlet 137 of the receivable hub 138. An electric element regulator 168 with a power cord 139 is connectable with the electrical power inlet 137 for providing a regulated electric power supply to the electric heating element 134. Such a design however is only elaborative but not restrictive as a person skilled in the art may choose to structure the dual-fuel cooking modes in different configurations. The rotatable cooking unit 130 is rotatable by rotating the receivable hub 132 within the receiver hub 125 of the cooking chamber through preferably 180 degrees to alternatively select a preferred one of the dual-fuel cooking modes. In one example, the second cooking mode is adjacent the concave side of the reflector as the profile of the reflector will enhancing heat radiation of the electric heating element 134 of the second cooking mode element, which has a different heat generating characteristic to the first cooking mode element.

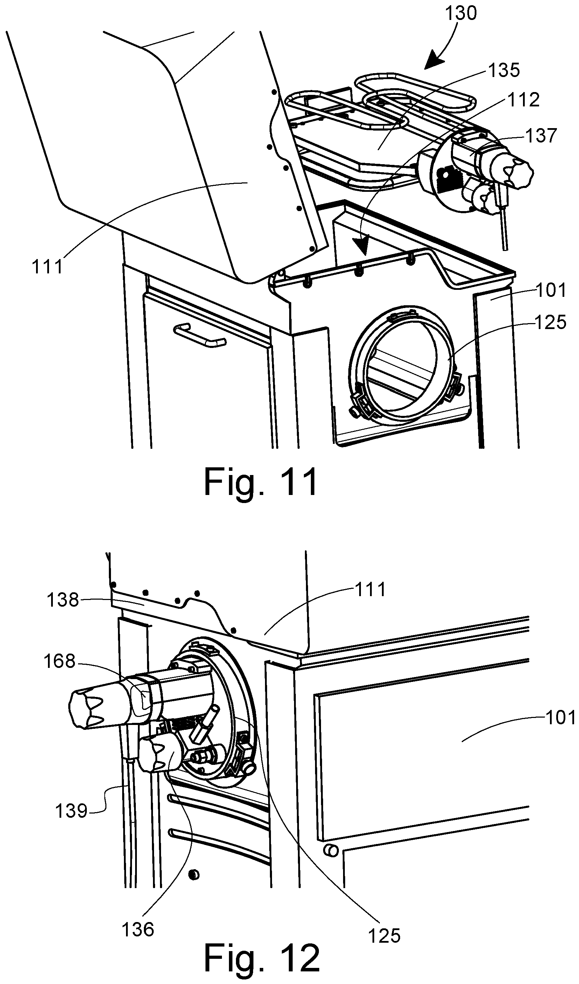

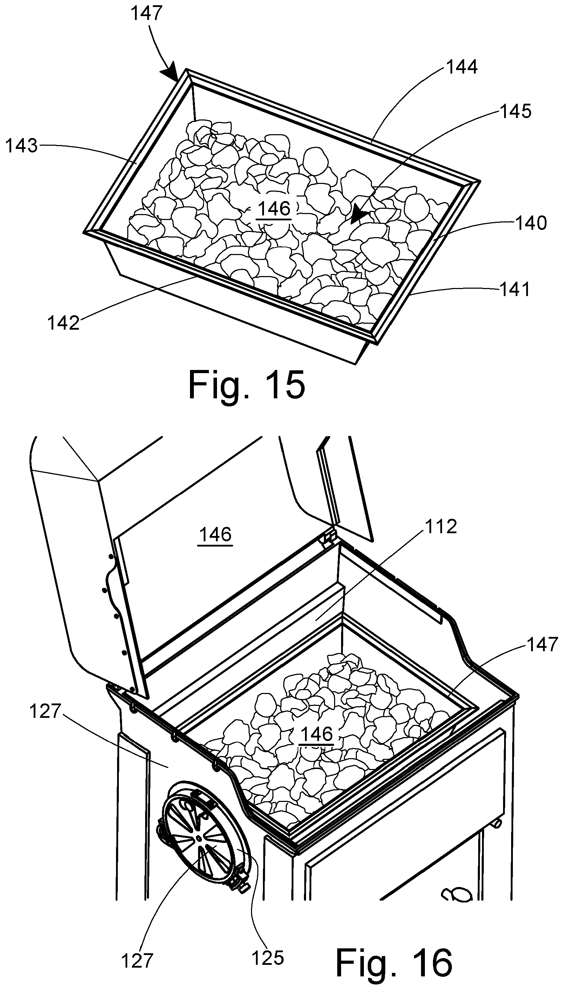

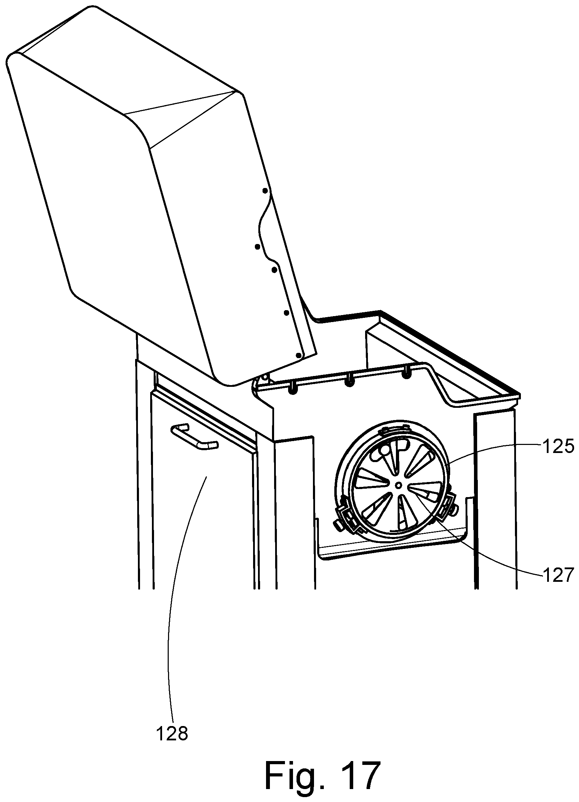

Referring to Figures 15 and 16, a third cooking mode of the barbecue is a charcoal (coal) mode of cooking fuel. As illustrated in Figure 15 a charcoal bin 140 or container which may be made from cast iron or other metal materials such as stainless steel and the like. The charcoal bin 140 includes a base and at least a first pair of opposing side walls 141, 143 and a second pair of opposing side walls 142, 144 extending upwardly from the base in order to define a chamber 145 between the walls for retaining heated coals 146. An outwardly extending flange or lip 147 is provided at a top rim of the four side walls 141-144 of the container to provide a supporting means for the bin 140 within the cooking chamber 110 of the barbecue. In such a configuration the rotatable cooking unit 130 is removed in the manner shown in Figure 11 and can be replaced with the variable vent or flue means 127 illustrated in Figure 17. The charcoal bin 140 of Figure 15 is disposed within the cooking chamber 110/ interior space 112 of the barbecue and provides a third-fuel cooking mode of the barbecue being a coal cooking mode.

In Figure 2 the modular multi-fuel cooking appliance is generally available in gas or electric powered configuration. In some variations, the appliance of Figure 2 may have interchangeable cooking modules described with reference to Figures 3 to 5 and/or 6 to 17.

A dual-fuel rotatable cooking unit 130 was described with reference to Figures 9 to 14 and/or US2018073739. In other examples a single-sided linear gas electric dual fuel module may incorporate the gas and electric elements together in a single side as illustrated and described with reference to Figure 27. In yet a further example a gas electric dual-fuel cooking module may include an invertible cooking module as described with reference to Figure 3A, such that the dual-fuel module may be removed, flipped or inverted 180 degrees and then replaced with the opposite fuel mode operable.

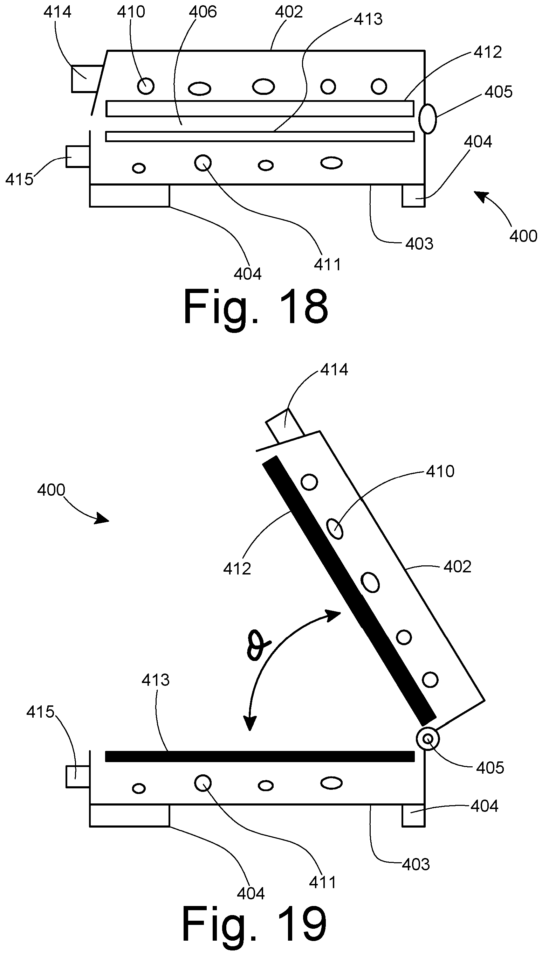

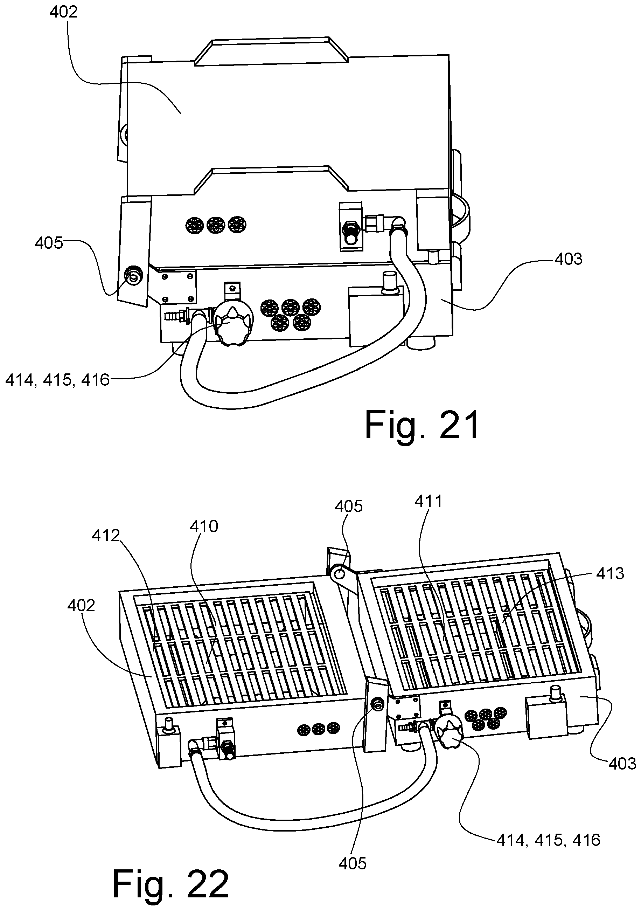

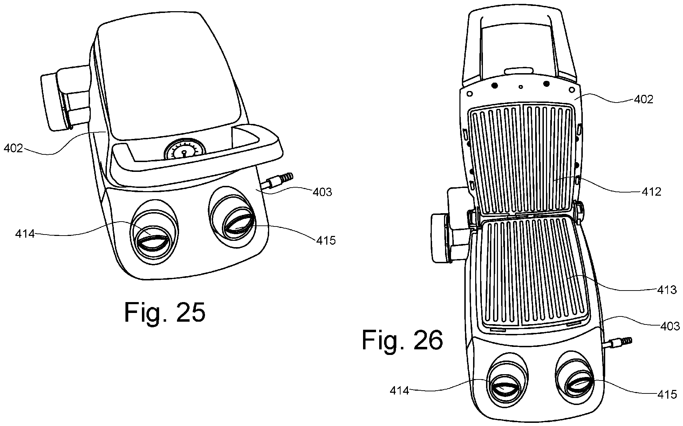

Referring now to Figures 18 to 20, 21, 22, 23, 24, 25, 26, there shown is embodiments of multi-fuel cooking appliance according to aspects of the invention. In this configuration, described as a clamshell, sandwich toaster or hinged type contact grill 400, there is provided an outer case having an upper case half 402 and a lower case half 403. The lower case half 403 has feet 404 for supporting the grill 400 on a work surface. The upper case half 402 and lower case half 403 are hingedly joined along one edge by a hinge joint 405 to be moveable between a closed configuration and an open configuration. In one example, the lower case half may be a lid, and the upper case half may be a base. In one example, the upper case half may be a lid, and the lower case half may be a base. In the closed configuration shown in Figures 18 and 21 the upper case half 402 and lower case half 403 are positioned to oppositely face each other with a food cooking space 406 between the upper case half 402 and lower case half 403. In some embodiments shown in Figure 21 the hinge 405 is an articulating hinge joint, or a floating hinge, or a lost motion type with for instance the pintles running in slots to allow varying distance from top to bottom plate to provide a variable food cooking space 406 between the closed upper case half 402 and lower case half 403 to accommodate various thicknesses of food. In the open configuration the upper case half 402 and lower case half 403 are separated from one another by an angle theta (θ) which may be greater than 45-degrees but preferable at least 90-degrees and in some embodiments 180-degrees, see for example Figures 22, 23, 24, and 26.

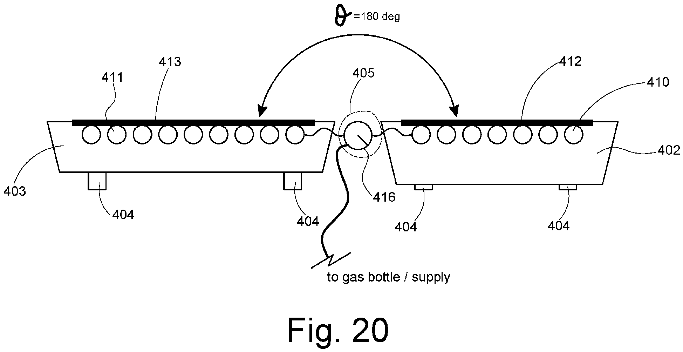

In one embodiment each of the upper case half 402 and lower case half 403 are each arranged to accommodate a cooking module, such as one of the cooking modules as herein described with reference to Figures 3 to 5 and/or 6 to 17. Each of the cooking modules in the upper case half 402 and lower case half 403 can be interchangeable, or they can be non-interchangeable (e.g., fixed). Referring to a gas cooking module, upper and lower gas elements 410, 411 are controlled by respective gas regulators 414, 415 located optionally on a front edge of the upper case half 402 and lower case half 403. In some embodiments the upper and lower gas elements 410, 411 are controlled by a single gas regulator located on one of the upper case halves 402 and lower case half 403, or in some embodiments a single gas regulator located co-axial with the hinge 405, as shown in Figure 20.

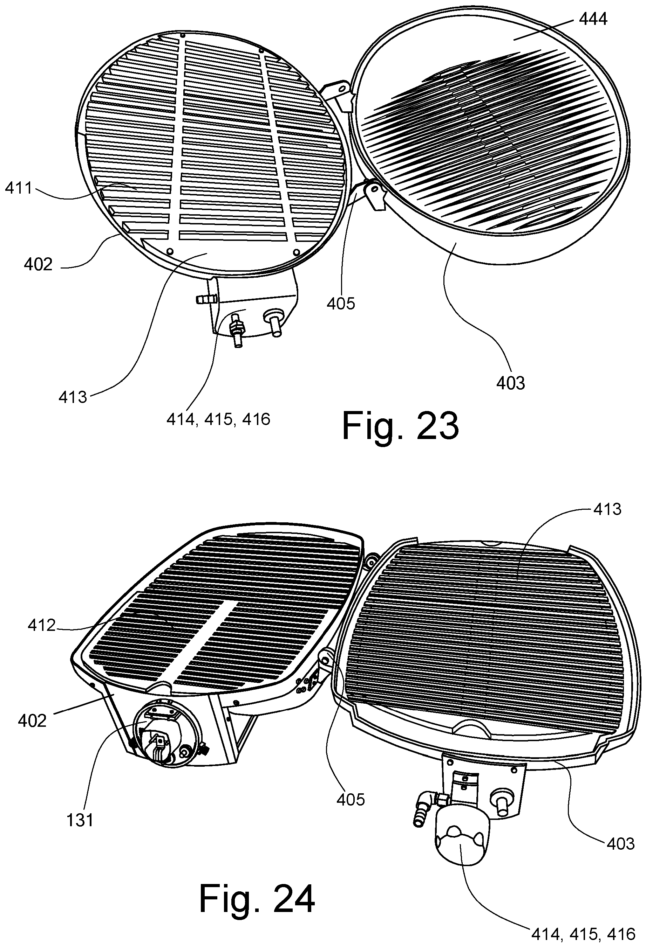

Referring to Figures 20, 22, 23, and 24, the upper case half 402 and lower case half 403 may open 180 angular degrees so both may lay flat doubling the area for single side grilling. Referring to Figure 23, a single gas regulator may be located co-axial with the hinge 405 and supplied from a single gas bottle or supply (not shown).

Referring to Figure 23, the upper case half 402 and lower case half 403 are coupled via a hinge 405. In this embodiment, the upper case half 402 is a body, optionally with handle, which can be used as a lid, and the lower case half 403 is a base. In this embodiment the body is generally dome shape and is made of steel. A grill plate is arranged on and removably attached to the body. Inside the body there is gas element 410 controlled by one or more gas regulators 414, 415, 416 providing a gas burner. A die cast electric grill plate 444 is arranged on, and removably attached to, the base. The die cast electric grill plate has a staked-in heating element that preferably operates using electricity. The upper and lower case halves 402, 403 are movable between open and closed (or substantially closed, when a food item is placed therebetween) configurations. In the open configuration the grill plate and the die cast electric grill plate are arranged on substantially the same plane or on substantially parallel planes. In the substantially closed configuration, the grill plate and the die cast electric grill plate are arranged in generally facing relation to each other. Optionally clasp(s) may be provided to lock the upper and lower case halves 402, 403 when in the closed configuration. The appliance in Figure 23 provide two separate cooking surfaces, which can be used selectively or simultaneously (by operating the gas element and/or the electric grill plate as needed), when in the open configuration. In one variation the upper case half 402 can be the base and the lower case half 403 can be the lid. The appliance in Figure 23 provides an electric grill in one half, and a gas only bbq/grill in another half. The appliance can be used for indoor grill or outdoor grill.

Referring to Figure 24, the upper case half 402 and lower case half 403 are coupled via a hinge 405. In this embodiment, the upper case half 402 is a body, optionally with handle, which can be used as a lid, and the lower case half 403 is a base. A grill plate is arranged on and removably attached to the body. Inside the body there is a dual-fuel rotatable cooking unit 131, such as the one described with reference to Figures 9 to 14 and/or illustrated in US2018073739. Another grill plate is arranged on, and removably attached to, the base. Inside the base there is a gas element 410 controlled by one or more gas regulators 414, 415, 416 providing a gas burner. The upper and lower case halves 402, 403 are movable between open and closed configurations. In the open configuration the grill plates are arranged on substantially the same plane or on substantially parallel planes. In the closed configuration, the grill plates are arranged in generally facing relation to each other. Optionally clasp(s) may be provided to lock the upper and lower case halves 402, 403 when in the closed configuration. The appliance in Figure 24 provides two separate cooking surfaces, which can be used selectively or simultaneously when in the open configuration. In one variation, the upper case half 402 can be the base and the lower case half 403 can be the lid. The appliance in Figure 24 provides a rotary dual-mode bbq/grill (electric & gas) in one half, and a gas only bbq/grill in another half. The appliance can be used for indoor grill or outdoor grill.

In yet further alternative embodiments, the clamshell grill may include interchangeable fuel modules in the configurations such as modules A, B, C, D and E hereinbefore described with reference to Figures 3 and 3A to 5 and 27, and/or a dual-fuel rotatable cooking unit 130 described with reference to Figures 9 to 14 and US2018073739. As described, the element may be as shown, or in hard contact with or more normally, cast/embedded into the hotplate material. The unit may not utilize any hot plates at all and cook by radiation only from electric elements 203 or gas element 202 radiation, preferably from surface gas burners or the like, especially on the top half radiating downwards. As well, the invention is not limited to metal sheathed electric elements, as open wire type as seen in toasters, and tubular quartz enclosed wire wound elements area are also envisaged. Infra-red bulbs may also be utilized.

Figure 27 is a view of the plan (top or birds-eye) view of a single-sided linear configuration multi-fuel cooking module 301 of another embodiment of a multi-fuel barbecue grill according to some aspects of the invention. Shown is the lower body of cooking chamber 301. A gas burner element 302 in straight configuration, and the serpentine shaped electric element 303 and disposed together in the chamber 301, such that there is no need to rotate or change the cooking element module as in aforementioned embodiments. Both cooking fuel elements 302, 303 co-exist in the cooking chamber 301. The serpentine electric element 303 is arranged with two elongate loops or fingers extending away from the hub end on either side of the gas element 302. The two fingers are connected to form a series element by a web section between the proximate non-terminal hub ends of the fingers. The web section of the element 303 does not cross the gas burner in any flame areas of the gas element 302. It has been found however that if the element 303 does cross the burner flame areas that the materials used in the construction of the element can withstand the expected temperatures caused by the gas flames, so an element of almost any shape may be employed. The gas and electric elements 302, 303 may both be shaped in for instance serpentine shapes, or differently, such that in combination the electric element 303 does not cross direct flame areas of the gas element 302.

Figure 28 shows an end section view of the barbecue of Figure 27. A grill plate cooking surface 304 is shown disposed above or planar with the gas element 302 and electric element 303 which are mounted in the same cooking chamber 301. The electric element 303 is shown mounted above the gas burner 302 so as to be closer to the grill plate 304 and/or food for good cooking performance. However, the element may be mounted above, below, or side-by-side with the gas burner 302. A reflector 305 is shown to enhance the upward radiation of the electric element 303, a similar part may be mounted below the gas burner 302 as a heat shield for the bottom surface of the cooking chamber 301. Generally, a drip tray 306 is provided inside or externally to the cooking chamber 301.

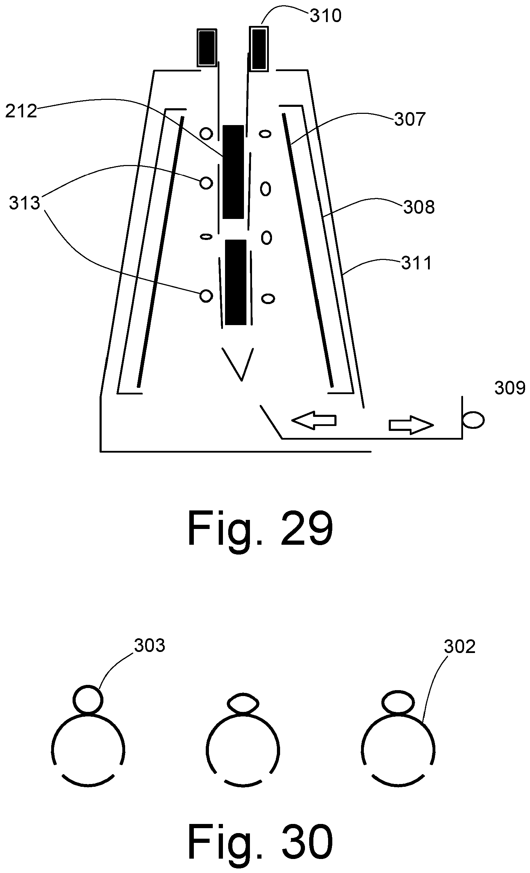

Figure 29 shows a vertical configuration of the barbecue grill. An end cross section view of a vertical grill is shown. In a vertical example an outer case 311 may be of a frustoconical configuration, or in first or second pairs of opposed side walls defining a vertical cooking chamber an upper (top) opening. A removable clamshell food holding rack 310 is removably receivable through the upper opening into the cooking chamber and held approximately on the centerline of the unit. Each side of the food rack 310 accommodates an electric cooking element 313. Outside the electric element 313 is preferably a surface combustion gas burner hot surface 307 and burner case 308. Food items 212 are placed in the clamshell rack 310 and the rack 310 and food 212 inserted into the allotted space in the cooking chamber formed between the gas burners 307 and electric elements 313. In some examples the electric heating elements 313 may be omitted such that the arrangement is a gas only version of this configuration. Burners 307 of different configurations may be utilized in any version without departing from the scope of the invention as defined by the claims. Again, for efficiency it is shown, and preferred, that the electric elements 313 are closer to the food cooking area than the gas burners 307. The elements 313 are designed to handle the gas temperatures when in gas mode with power off.

Figure 30 depicts a further embodiment where the gas burner 302 and electric element 303 track the shape of each other and are mounted in contact or close to each other. The intention here is that each element keeps the other quite hot to reject fat and other fluids if they drip onto the elements.

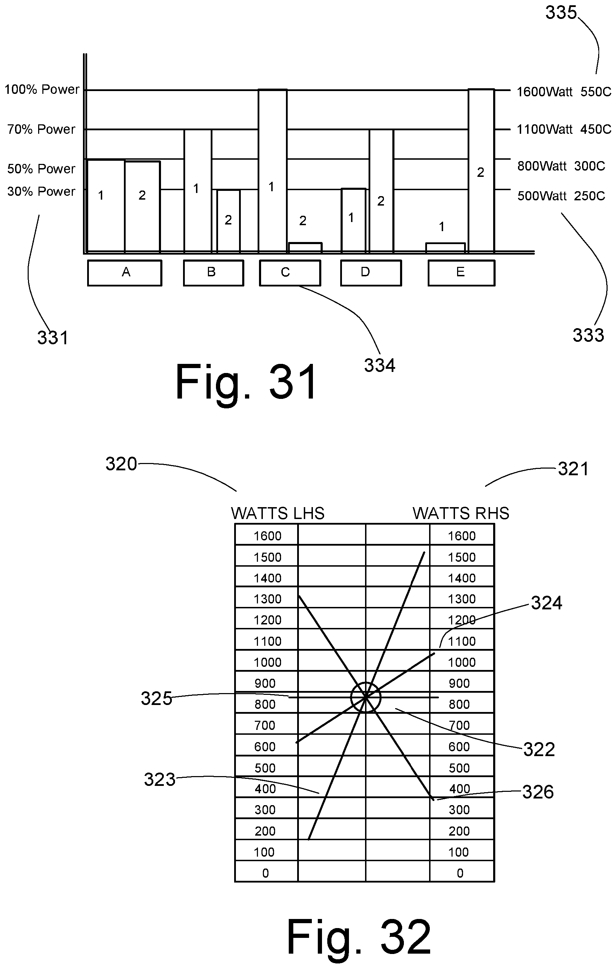

Reference is now made to Figures 31 and 32. A barbeque cooking appliance is disclosed that is of any of the configurations described above, which is larger in effective cooking area than is usual. (For example, 50% to 100% larger for built in or trolley type barbeque cooking appliances) In conventional terms the cooking performance of very large barbeque cooking appliances to sear and cook meats etc. would be unacceptable mainly because the temperature of the element is lower than needed to sear food and for plug-in appliances the allowable max power is limited. In the USA the power available from a single outlet is normally 1800 watts maximum. In Europe and Australia 2200-2400 watts are available. Even extended cooking times on a cooler plate cannot attain searing, only "stewing", a term used in the industry. It is a further object of the one aspect to provide an appliance, preferably a barbeque cooking appliance with electric elements, which helps to overcome the disadvantages of low power available. Disclosed is a barbeque cooking appliance in which the total apparent wattage is in excess (e.g., approx. two times) of the maximum allowable. The invention uses these elements in such a way that the apparent wattage of all elements is controlled, so that the maximum actual recorded wattage at any one time is not in excess of that allowable by regulation for the supply connection.

It has been found that surprisingly the grill performs well because searing etc. is only used for a short time in a normal barbeque cooking appliance and then energy levels are turned down to finish cooking. It has been found that when the elements are used in this way, because they are basically already quite hot, (Say at Position A on Figure 31), the transient response time to attain "grilling" temperatures from the 50% power level is quite fast compared to performance from cold, as the element is already running at 50% power. Typically, the controller would run each element up at say 50% power, alternatively switching max from one to the other. At a selected setting the controller would put all power into one element to attain a searing hot temperature to sear the food over that element. The period may be as short as 1 second out to several minutes and the invention does not limit any combination of power splits. The control of the power "split" between elements 1 and 2 may be instigated by temperature of grill or food, time, other sensors, fuzzy logic or any other technique that attains the desired result and does not violate the maximum watts allowance for plug-in units at the relevant voltage.

Reference is now made to Figure 31. A table is shown that illustrates control aspects of some embodiments of the invention. The left-hand axis 331 shows % Power. The different controlled modes 334 indicate the relative power to each element at a given time. This is for illustration only and one embodiment would enable infinite control of the split of power between the elements.

The invention is not limited by how many elements are to be controlled in this manner but at least two will be involved. The actual power axis 333 expresses the % power as Watts of power, and the approximate temperature chart 335 illustrates how temperatures may vary with wattage. (Illustrative only).

As seen at A, element 1 and element 2 are both held at a 50% energy level, the unit power consumption is therefore two times 50% but the element temperature is only 300-deg Celsius, not glowing. It can be seen at B and later C that the differential split of power can be varied to at least drive at least one element to a grilling or desired temperature well above what could be attained by a normal control which would have the elements at a nominal 1600 watt maximum. Shown at D and E are the reverse applications of power where 1 is cooler and 2 is hotter.

In the embodiment as seen in Figure 32, a differential splitting of the elements, preferably with an infinite control or a multi-step controller (preferably a Pulse Width Modulation control), will allow the operator to attain whatever temperatures they wish on any given element within the range available, as partially illustrated in Figure 31. It is also disclosed that the control may be manually adjusted or be under automatic control to attain good cooking on both sides of the barbeque cooking appliance even though the power is still within the regulatory defined limits. In effect if a unit is fitted with two 1800 Watt elements clipped by the controller to effectively be two 900 Watt elements, the unit can be controlled in infinite number of steps to the limit of 1800 Watts on one element only and zero watts on the other, and thus will be able to deliver searing/browning power as, if two 1800 Watts were available. Of course, it would be at a slightly slower rate, because up to 1800 watts would be available on one element only at one time if required. It has been found however that the unit, once preheated, has a thermal flywheel effect that helps keep temperatures quite hot and depending on the cycle profile the reheat time for any suppressed element is quite short. This peak wattage performance on each plate is not possible on existing barbeque cooking appliances. Some employ a timed "searing" thermostat override control but the max wattage of 900 watts per side cannot be exceeded. The use of this differential wattage concept may translate into a larger than usual barbeque cooking appliance to be viable without exceeding the statutory max wattage overall.

Referring to Figure 32, in a simple embodiment, the control shown at Figure 32 would include a single user control 322 that supplies a differential amount of energy to each plate. As an example, the chart indicates two 1800-watt elements with a left side element (wattage chart) 320 and a right-hand element (wattage chart) 321. When the control knob 322 is rotated say clockwise, the line 323 indicates that the left-hand wattage is very low and the right-hand wattage is almost at maximum. As the knob 322 is rotated further clockwise the line 323 moves to the position described at line 324 which has increased the left side and reduced the right side in the same proportion. Further rotation of the knob clockwise indicates at 325 a 50-50 split from left side to right side 309, i.e., 900 watts each, and at the limit shown at 326 the right side has maximum wattage and the left-hand side has almost zero. It can be seen that at no point does the sum of the wattages exceed the nominal statutory maximum of 1800 watts. The wattages expressed here are for illustration purposes only.

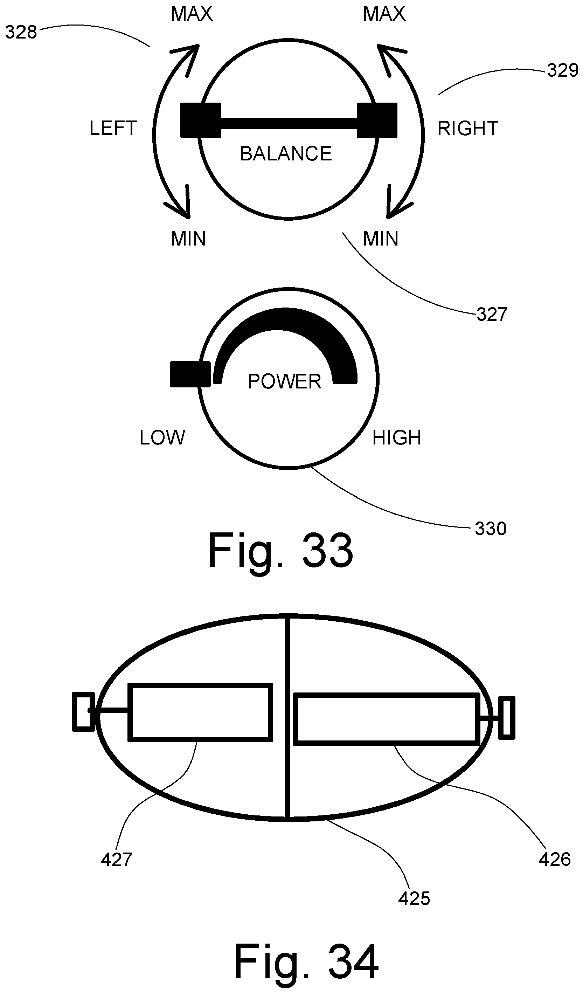

Reference is now made to Figure 33, one embodiment includes manual control shown as a control knob 327 which is the physical version of the central control 322 in Figures 31 and 32 above. It shows a left side 328 and a right side 329. The effect of turning the knob 327 has the same effect as shown in Figure 32. The use of a single control knob not only simplifies the use, but most importantly keeps both sides in inverse synchronization ensuring that the unit cannot exceed the allowable maximum at any point in time.

To control the overall maximum at any point but keeping the left/right % of power at the desired level, an overall energy regulation device is accessed by using the control knob 330. Of course, each side could have an energy regulator but the use and complexity would be difficult as the aim is to keep the maximum wattage under the max allowable for that connection. The design is not limited to manual control and any manual or automatic energy and/or thermostatic control could be used to attain the desired energy split and overall temperature control.

A grill plate 425 of generally larger surface area than can be heated by a single electrical connection is shown in Figure 34. A first heating system of combined electrical / gas heating cooking unit 426 is shown. A second heating unit powered by gas-only 427 is shown.

A barbeque cooking appliance of the type described in Figure 34 has approx. 50% of the area heated by either gas or electric, and the other half heated by gas only. In this way a larger barbeque cooking appliance is provided. Mode 1: 50% area on power or gas, utilizing cooking unit 426 and 100% area on gas if no electric power is available, utilizing the gas portion of cooking unit 426, and the gas only portion 427. It can be therefore seen that one appliance can offer the convenience of cooking on 50% area electrically, and 50%-100% area cooking when on gas. Any appropriate split of power side to side is allowed for in the design. It is also foreseen that the invention applies to two or more heating units in a single barbeque cooking appliance unit.

The electric tubular elements in any of the configurations depicted above may be integrated with the plate by force fit, or direct insert casting into the hot plate cooking surface as in a sandwich maker/clamshell type of barbeque cooking appliances/grills. It is also applicable in electric grills as depicted in Figures 18 to 20, 21, 22, 23, 24, 25, and26 as it delivers heat to the food by direct conduction and the limited electric power is thus used efficiently.

It has been found surprisingly that because these electric elements are designed to run very hot, and in some cases glowing especially when used as indirect radiant elements, having surface temperatures of approx. 600°C or 1000°F, or they can withstand the relatively moderate temperatures that they would be subjected to when they are in an off state but the gas is operating, in the arrangements preferred and shown in the invention drawings.

Inverse to that, when the electric elements are working, and the gas is off, the temperatures attained on the gas burner equipment is below the max allowable temperatures of the materials mandated to be used in gas burners. It has therefore been found that both heating elements (gas and electric) can be utilized in the same cooking chamber provided they are controlled by interlock or similar to isolate one or other of the control mechanisms, so as to inhibit simultaneous use.

Various modifications can be made to the designs. They include but are not limited to electrically blocking one fuel from use if the other is in use, mechanically blocking access to one control if the other is in use, blocking one or the other electrically if thermal sensors indicate that one is on, etc. This would be a mandatory requirement in most jurisdictions. In use typically the electric elements and the gas burner tubes run hot enough to reject/eject any drips from the food, so as to not bake food residue onto the elements. The gas burners normally have the gas exit ports below the centerline of the burner (Figure 30) to avoid food residue from blocking the gas ports. It is also envisaged that cooking surfaces are designed and used in the normal manner in that there are integral blanked areas of an open grill to ensure drips are directed away from the gas burners, to be collected below in a supplied fat drip tray.

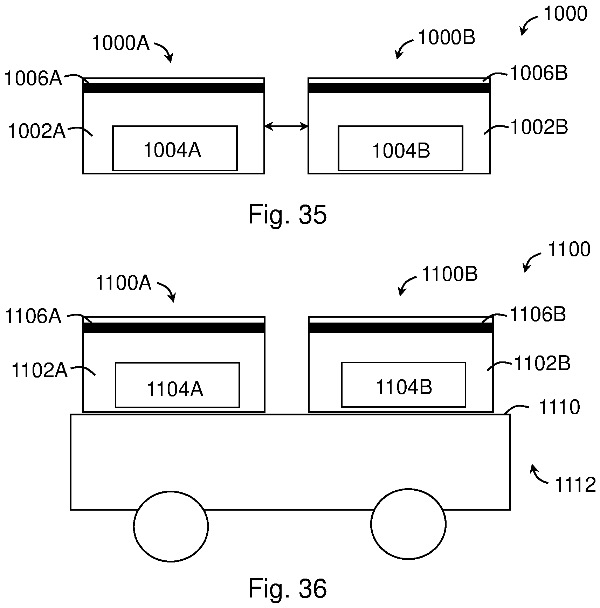

Figure 35 illustrates, schematically, an embodiment of a (modular) cooking appliance 1000 in one embodiment not forming part of the invention. The cooking appliance 1000 includes a first cooking module 1000A and a second cooking module 1000B, e.g., operably connected with the first cooking module 1000A. The first cooking module 1000A includes a first cooking chamber 1002A, a first cooking element 1004A arranged in the first cooking chamber 1002A, and a first cooking surface 1006A. The first cooking element 1004A is arranged to be heat the first cooking surface 1006A. The second cooking module 1000B includes a second cooking chamber 1002B, a second cooking element 1004B arranged in the second cooking chamber 1002B, and a second cooking surface 1006B. The second cooking element 1004B is arranged to be heat the second cooking surface 1006B.The first cooking element 1004A includes one of, or at least one of: an electric cooking element, a gas cooking element, a combination of electric and gas cooking elements, or a bin having a chamber for accommodating hot coals. The second cooking element 1004B comprises one of, or at least one of: an electric cooking element, a gas cooking element, a combination of electric and gas cooking elements, or a bin having a chamber for accommodating hot coals.

Optionally, the first and second cooking elements 1004A, 1004B are different types of cooking elements. In one example the first cooking element 1004A is gas cooking element and the second cooking element 1004B is electric cooking element. In another example the first cooking element 1004A is a combination of electric and gas cooking elements and the second cooking element 1004B is a gas cooking element. In yet another example, the first cooking element 1004A is a combination of electric and gas cooking elements and the second cooking element 1004B is an electric cooking element.

Optionally, the first and second cooking elements 1004A, 1004B are the same type of cooking elements. For example, both the first and second cooking elements 1004A, 1004B are gas cooking elements. For example, both the first and second cooking elements 1004A, 1004B are the dual-fuel rotatable cooking unit 130 described with reference to Figures 9 to 14 and/or as described in United States patent publication no. US2018073739.

Optionally, the two cooking elements 1004A, 1004B share the same gas/power source. Optionally, the two cooking elements 1004A, 1004B use different gas/power sources.

Optionally, the first cooking element 1004A is removable from the first cooking module. Optionally, the first cooking element 1004A is non-removable from the first cooking module.

Optionally, the second cooking element 1004B is removable from the second cooking module. Optionally, the second cooking element 1004B is non-removable from the second cooking module.

Optionally, the combination of electric and gas cooking elements includes independently controllable electric cooking element and gas cooking element. Optionally, the combination of electric and gas cooking elements includes simultaneously or alternately operated electric cooking element and gas cooking element. Optionally, the combination of electric and gas cooking elements are arranged in a rotatable assembly, such as the one described with reference to Figures 9 to 14, such that they can rotated about a rotation axis to selectively use electric or gas.

Optionally, the first cooking surface 1006A is removable from the first cooking module. Optionally, the first cooking surface 1006A is non-removable from the first cooking module. Optionally, the second cooking surface 1006B is removable from the second cooking module. Optionally, the second cooking surface 1006B is non-removable from the second cooking module. Optionally, the first and second cooking surfaces 1006A, 1006B are of the same shape and/or size.

Optionally, the first cooking surface 1006A is provided by, at least, a cooking plate, a grill plate, a grill, a grill mesh, a griddle plate, an electric die cast grill plate, etc. Optionally, the second cooking surface 1006B is provided by, at least, a cooking plate, a grill plate, a grill, a grill mesh, a griddle plate, an electric die cast grill plate, etc. Optionally, the first and second cooking surfaces 1006A, 1006B are the same or different types of surfaces.

Optionally, the first cooking element 1004A is integrated with the first cooking surface 1006A as a single piece or member or assembly. For example, the first cooking element 1004A is embedded in a means or device or element (e.g., a cooking plate, a grill plate, a grill, a grill mesh, a griddle plate, an electric die cast grill plate, etc.) that provides the first cooking surface 1006A.

Optionally, the second cooking element 1004B is integrated with the second cooking surface 1006B as a single piece or member or assembly. For example, the second cooking element 1004B is embedded in a means or device or element (e.g., a cooking plate, a grill plate, a grill, a grill mesh, a griddle plate, an electric die cast grill plate, etc.) that provides the second cooking surface 1006B.

Optionally, the first and second cooking surfaces 1006A, 1006B are separate but form a continuous surface (e.g., arranged side by side when in the open configuration).

Optionally, the first cooking module includes one or more of: a stand, one or more legs, one or more handles, or movement means (wheels, casters, etc.). Optionally, the second cooking module includes one or more of: a stand, one or more legs, one or more handles, or movement means (wheels, casters, etc.).

Optionally, the first and second cooking modules are arranged on, e.g., attached to, mechanically and/or magnetically, the same surface, which is preferably a flat surface, or on different surfaces in substantially the same plane. The surface(s) is/are provided by a cart, a bench, a table, cart, which optionally has leg(s), wheel(s), etc.

Optionally, the cooking appliance further comprises a lid for the first cooking module. The lid may also be used as a lid for the second cooking module. Optionally, the cooking appliance further comprises a lid for the second cooking module. The lid may also be used as a lid for the first cooking module. Optionally, the cooking appliance further comprises two lids, one for each of the first and second cooking modules. The two lids may be of the same shape, size, height, form, etc. The lid may include no cooking element. The lid may be hinged to the cooking module, or may be a loose lid removably coupleable to the cooking module.

Optionally, the first and second cooking modules form first and second cooking halves of the cooking appliance. The two halves can be of the same shape, size, form, etc.

Optionally, the cooking appliance further includes a connector connecting the first and second cooking modules.

Optionally, the connector is integrated with one or both of the first and second cooking modules, or it is removably coupled with one or both of the first and second cooking modules. Optionally, the connector comprises a hinge arranged between the first and second cooking modules. Optionally, the cooking appliance is movable between a substantially closed configuration, in which the first and second cooking surfaces 1006A, 1006B generally face each other, and an open configuration, in which the first and second cooking surfaces 1006A, 1006B are not in facing relation with each other (e.g., the first and second cooking surfaces 1006A, 1006B are arranged in substantially the same plane).

Optionally, the cooking appliance 1000 further includes a locking means arranged on the first and/or second cooking modules to lock the first and/or second cooking modules in the closed configuration. The locking means may include a clasp, a latch, etc. The locking means may be arranged on the first and/or second cooking modules on an opposite side of the hinge.

Optionally, the cooking appliance 1000 further includes a rotisserie spit rod / spit rod forks arranged in the first and/or second cooking chambers 1002A, 1002B, e.g., between the first and second cooking surfaces 1006A, 1006B. Optionally, the cooking appliance 1000 further includes a motor arranged to rotate the rotisserie spit rod / spit rod forks. The motor may be powered by DC (e.g., battery) or AC.

Optionally, the cooking appliance 1000 may be "powered" by gas (fuel) or electricity (AC and/or DC, e.g., battery) as appropriate. The battery may be rechargeable.

Optionally, the cooking appliance 1000 is portable. Optionally, the cooking appliance 1000 is an indoor cooking appliance. Optionally, the cooking appliance 1000 is an outdoor cooking appliance. Optionally, the cooking appliance 1000 is an indoor-and-outdoor cooking appliance. Optionally, the cooking appliance 1000 is a benchtop cooking appliance. Optionally, the cooking appliance 1000 is a clamshell type cooking appliance, a contact grill type cooking appliance, etc.

The cooking appliance 1000 embodiment of Figure 35, along with its variations, can be implemented in or incorporated into, among other things, any of the device embodiments disclosed and illustrated in the drawings. In some implementations, the cooking appliance 1000 may include additional cooking modules (similar or the same as cooking modules 1000A, 1000B).

Figure 36 shows one embodiment of a cooking appliance 1100 based on the design in Figure 35. In this design, the two cooking modules 1100A, 1100B are both mounted, fixedly or movably or removably, on a platform or surface 1110 provided by a wheeled cart 1112. The two cooking modules1100A, 1100B do not touch each other in this example. In one variation, the surface 1110 may include recesses each configured to receive a cooking module.

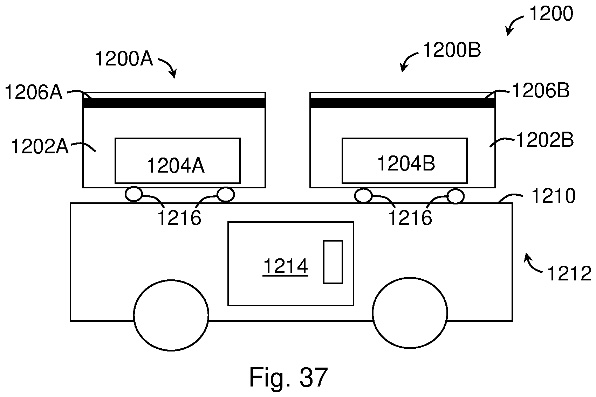

Figure 37 shows one embodiment of a cooking appliance 1200 based on the design in Figure 35. This design is similar to that in Figure 36, except that the two cooking modules are shown to include leg(s) and/or wheel(s) 1216, and that the wheeled cart 1212 includes a cabinet 1214, which allows storage of, e.g., foodstuff, the lids for the cooking modules 1200A, 1200B, kitchen utensils, etc.

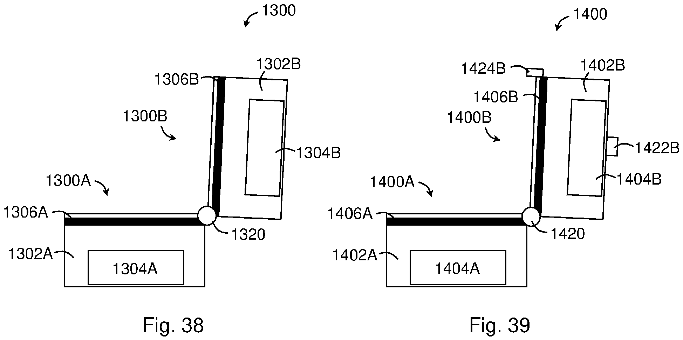

Figure 38 shows one embodiment of a cooking appliance 1300 based on the design in Figure 35. In this design, the two cooking modules 1300A, 1300B are hingedly connected together via a hinge 1320.

Figure 39 shows one embodiment of a cooking appliance 1400 based on the design in Figure 35. This design is similar to that in Figure 38, except that one of the cooking modules 1400B includes a handle 1422B and a locking member 1424B for locking the appliance 1400 when closed.

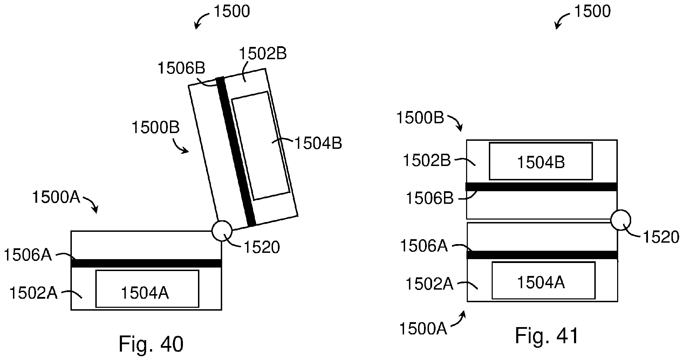

Figure 40 shows one embodiment of the cooking appliance 1500 of Figure 35. This design is similar to that in Figure 38, except that the cooking surfaces 1506A, 1506B are arranged further deep inside the respective cooking chamber 1502A, 1502B.

Figure 41 shows one embodiment of the cooking appliance 1500 of Figure 40 in the closed configuration. When closed, the two cooking surfaces are spaced apart to receive food to be cooked. The cooking appliance 1500 can include a rotisserie (hot shown) incorporated or arranged therein, between the two cooking surfaces 1506A, 1506B.

The described embodiments of the invention should be considered in all respects as illustrative, not restrictive. The scope of the invention is defined by the claims.

## Claims

1. A cooking appliance (1300; 1400; 1500) comprising:
a first cooking module (402; 1300A; 1400A; 1500A) and a second cooking module (403; 1300B; 1400B; 1500B) arranged to be hingedly connected adjacent one edge such that they can be pivotally moved between an open configuration and a substantially closed configuration; the first cooking module comprising a first cooking chamber (1302A; 1402A; 1502A), a first cooking element (1304A; 1404A; 1504A) arranged in the first cooking chamber, and a first cooking surface (1306A; 1406A; 1506A), the first cooking element being arranged to heat the first cooking surface;
the second cooking module comprising a second cooking chamber (1302B; 1402B; 1502B), a second cooking element (1304B; 1404B; 1504B) arranged in the second cooking chamber, and a second cooking surface (1306B; 1406B; 1506B), the second cooking element being arranged to heat the second cooking surface;
and
wherein the second cooking element includes: an electric cooking element, a gas cooking element, a combination of electric and gas cooking elements, or a bin having a chamber for accommodating hot coals;
**characterized in that** the first cooking element includes: a combination of electric and gas cooking elements arranged in a rotatable assembly that is rotatable about a rotation axis to selectively use electric or gas.

2. The cooking appliance (1300; 1400; 1500) of claim 1, wherein the first and second cooking elements are different types of cooking elements.

3. The cooking appliance of claim 1, wherein the second cooking element is comprised of a gas cooking element.

4. The cooking appliance of claim 1, wherein the first and second cooking elements are each comprised of a combination of electric and gas cooking elements arranged in a rotatable assembly, the rotatable assembly being rotatable about a rotation axis to selectively use electric or gas.

5. The cooking appliance (1300; 1400; 1500) of any preceding claim, wherein, in the open configuration, the first and second cooking surfaces are in substantially the same plane, and wherein in the substantially closed configuration, the first and second cooking surfaces generally face each other.

6. The cooking appliance (1300; 1400; 1500) of any one of claims 1 to 5, wherein the first cooking element is removably supported within the first cooking chamber.

7. The cooking appliance (1300; 1400; 1500) of any one of claims 1 to 6, wherein the second cooking element is removably supported within the second cooking chamber.

8. The cooking appliance (1300; 1400; 1500) of any one of claims 1 to 5, wherein the first cooking element is removably supported within the first cooking chamber; wherein the second cooking element is removably supported within the second cooking chamber; and wherein the second cooking element is arranged to be removably supported within the first cooking chamber when the first cooking element is removed from the first cooking chamber and the second cooking element is removed from the second cooking chamber.

9. The cooking appliance (1300; 1400; 1500) of claim 6 or 8, further comprising a third cooking element that includes: an electric cooking element, a gas cooking element, or a bin having a chamber for accommodating hot coals; wherein the third cooking element is arranged to be removably supported within the first cooking chamber when the first cooking element is removed from the first cooking chamber.

10. The cooking appliance (1300; 1400; 1500) of any one of claims 1 to 9, wherein the first and second cooking surfaces are arranged to be independently heated solely by the respective first and second cooking elements.

11. The cooking appliance (1300; 1400; 1500) of any one of claims 1 to 10, wherein the first and second cooking surfaces are arranged to simultaneously contact heat upper and lower surfaces of a food item.

12. The cooking appliance (1300; 1400; 1500) of any one of claims 1 to 11, wherein the cooking appliance is a clamshell or contact-grill type cooking appliance.

13. The cooking appliance (1300; 1400; 1500) of any one of claims 1 to 12, wherein the first cooking module is operable as a lid for the second cooking module.

14. The cooking appliance (1300; 1400; 1500) of any one of claims 1 to 13, wherein the cooking appliance is an indoor-outdoor-hybrid cooking appliance.

## Patentansprüche

1. Kochgerät (1300; 1400; 1500), umfassend:
ein erstes Kochmodul (402; 1300A; 1400A; 1500A) und ein zweites Kochmodul (403; 1300B; 1400B; 1500B), die so angeordnet sind, dass sie gelenkig an einer Kante angrenzend verbunden sind, so dass sie schwenkbar zwischen einer offenen Konfiguration und einer im Wesentlichen geschlossenen Konfiguration bewegt werden können;
wobei das erste Kochmodul eine erste Kochkammer (1302A; 1402A; 1502A), ein erstes Kochelement (1304A; 1404A; 1504A), das in der ersten Kochkammer angeordnet ist, und eine erste Kochfläche (1306A; 1406A; 1506A) umfasst, wobei das erste Kochelement angeordnet ist, um die erste Kochfläche zu erhitzen;
das zweite Kochmodul eine zweite Kochkammer (1302B; 1402B; 1502B), ein zweites Kochelement (1304B; 1404B; 1504B), das in der zweiten Kochkammer angeordnet ist, und eine zweite Kochfläche (1306B; 1406B; 1506B) umfasst, wobei das zweite Kochelement angeordnet ist, um die zweite Kochfläche zu erhitzen;
**dadurch gekennzeichnet, dass** das erste Kochelement Folgendes einschließt: eine Kombination aus elektrischen und Gas-Kochelementen, die in einer drehbaren Anordnung angeordnet sind, die um eine Rotationsachse drehbar ist, um wahlweise Strom oder Gas zu verwenden, und
wobei das zweite Kochelement Folgendes einschließt: ein elektrisches Kochelement, ein Gaskochelement, eine Kombination aus elektrischen und Gaskoch-Elementen oder einen Behälter der eine Kammer zum Aufnehmen von heißen Kohlen aufweist.

2. Kochgerät (1300; 1400; 1500) nach Anspruch 1, wobei das erste und das zweite Kochelement unterschiedliche Arten von Kochelementen sind.

3. Kochgerät nach Anspruch 1, wobei das zweite Kochelement aus einem GasKochelement besteht.

4. Kochgerät nach Anspruch 1, wobei das erste und das zweite Kochelement jeweils aus einer Kombination von elektrischen und Gas-Kochelementen bestehen, die in einer drehbaren Anordnung angeordnet sind, wobei die drehbare Anordnung um eine Rotationsachse drehbar ist, um wahlweise Strom oder Gas zu verwenden.

5. Kochgerät (1300; 1400; 1500) nach einem der vorhergehenden Ansprüche, wobei in der offenen Konfiguration die erste und zweite Kochfläche im Wesentlichen in der gleichen Ebene liegen, und wobei in der im Wesentlichen geschlossenen Konfiguration die erste und die zweite Kochfläche im Allgemeinen einander gegenüberliegen.

6. Kochgerät (1300; 1400; 1500) nach einem der Ansprüche 1 bis 5, wobei das erste Kochelement herausnehmbar in der ersten Kochkammer gestützt ist.

7. Kochgerät (1300; 1400; 1500) nach einem der Ansprüche 1 bis 6, wobei das zweite Kochelement herausnehmbar in der zweiten Kochkammer gestützt ist.

8. Kochgerät (1300; 1400; 1500) nach einem der Ansprüche 1 bis 5,
wobei das erste Kochelement herausnehmbar in der ersten Kochkammer gestützt ist; wobei das zweite Kochelement herausnehmbar in der zweiten Kochkammer gestützt ist; und wobei das zweite Kochelement so angeordnet ist, dass es in der ersten Kochkammer herausnehmbar gestützt ist, wenn das erste Kochelement aus der ersten Kochkammer entfernt wird und das zweite Kochelement aus der zweiten Kochkammer entfernt wird.

9. Kochgerät (1300; 1400; 1500) nach Anspruch 6 oder 8, ferner umfassend ein drittes Kochelement, das Folgendes einschließt: ein elektrisches Kochelement, ein Gaskochelement oder einen Behälter der eine Kammer zum Aufnehmen von heißen Kohlen aufweist; wobei das dritte Kochelement so angeordnet ist, dass es herausnehmbar in der ersten Kochkammer gestützt ist, wenn das erste Kochelement aus der ersten Kochkammer entfernt wird.

10. Kochgerät (1300; 1400; 1500) nach einem der Ansprüche 1 bis 9,
wobei die erste und zweite Kochfläche so angeordnet sind, dass sie unabhängig voneinander ausschließlich durch die jeweiligen ersten und zweiten Kochelemente beheizt werden.

11. Kochgerät (1300; 1400; 1500) nach einem der Ansprüche 1 bis 10,
wobei die erste und die zweite Kochfläche so angeordnet sind, dass sie obere und untere Flächen eines Lebensmittels gleichzeitig durch Kontakt erhitzen.

12. Kochgerät (1300; 1400; 1500) nach einem der Ansprüche 1 bis 11,
wobei das Kochgerät ein Zweischalen- oder Kontaktgrill-Kochgerät ist.

13. Kochgerät (1300; 1400; 1500) nach einem der Ansprüche 1 bis 12,
wobei das erste Kochmodul als Deckel für das zweite Kochmodul fungiert.

14. Kochgerät (1300; 1400; 1500) nach einem der Ansprüche 1 bis 13, wobei das Kochgerät ein Indoor-Outdoor-Hybrid-Kochgerät ist.

## Revendications

1. Appareil de cuisson (1300 ; 1400 ; 1500) comprenant :
un premier module de cuisson (402 ; 1300A ; 1400A ; 1500A) et un deuxième module de cuisson (403 ; 1300B ; 1400B ; 1500B) agencés pour être connectés par charnière de manière adjacente à un bord de sorte qu'ils puissent être déplacés de manière pivotante entre une configuration ouverte et une configuration sensiblement fermée ;
le premier module de cuisson comprenant une première chambre de cuisson (1302A ; 1402A ; 1502A), un premier élément de cuisson (1304A ; 1404A ; 1504A) agencé dans la première chambre de cuisson, et une première surface de cuisson (1306A ; 1406A ; 1506A), le premier élément de cuisson étant agencé pour chauffer la première surface de cuisson ;
le deuxième module de cuisson comprenant une deuxième chambre de cuisson (1302B ; 1402B ; 1502B), un deuxième élément de cuisson (1304B ; 1404B ; 1504B) agencé dans la deuxième chambre de cuisson, et une deuxième surface de cuisson (1306B ; 1406B ; 1506B), le deuxième élément de cuisson étant agencé pour chauffer la deuxième surface de cuisson ;
**caractérisé en ce que** le premier élément de cuisson inclut : une combinaison d'éléments de cuisson électriques et à gaz agencés dans un ensemble rotatif qui est rotatif autour d'un axe de rotation pour utiliser sélectivement de l'électricité ou du gaz, et
dans lequel le deuxième élément de cuisson inclut : un élément de cuisson électrique, un élément de cuisson à gaz, une combinaison d'éléments de cuisson électriques et à gaz, ou un bac ayant une chambre pour accueillir des charbons chauds.

2. Appareil de cuisson (1300 ; 1400 ; 1500) selon la revendication 1, dans lequel le premier et le deuxième élément de cuisson sont des types différents d'éléments de cuisson.

3. Appareil de cuisson selon la revendication 1, dans lequel le deuxième élément de cuisson est constitué d'un élément de cuisson à gaz.

4. Appareil de cuisson selon la revendication 1, dans lequel les premier et deuxième éléments de cuisson sont chacun constitués d'une combinaison d'éléments de cuisson électriques et à gaz disposés dans un agencement rotatif, l'agencement rotatif pouvant être tourné autour d'un axe de rotation pour utiliser sélectivement l'électricité ou le gaz.

5. Appareil de cuisson (1300 ; 1400 ; 1500) selon l'une quelconque des revendications précédentes, dans lequel, dans la configuration ouverte, les première et deuxième surfaces de cuisson sont sensiblement dans le même plan, et dans lequel, dans la configuration sensiblement fermée, les première et deuxième surfaces de cuisson se font généralement face.

6. Appareil de cuisson (1300 ; 1400 ; 1500) selon l'une quelconque des revendications 1 à 5, dans lequel le premier élément de cuisson est supporté de manière amovible à l'intérieur de la première chambre de cuisson.

7. Appareil de cuisson (1300 ; 1400 ; 1500) selon l'une quelconque des revendications 1 à 6, dans lequel le deuxième élément de cuisson est supporté de manière amovible à l'intérieur de la deuxième chambre de cuisson.

8. Appareil de cuisson (1300 ; 1400 ; 1500) selon l'une quelconque des revendications 1 à 5,
dans lequel le premier élément de cuisson est supporté de manière amovible à l'intérieur de la première chambre de cuisson ; dans lequel le deuxième élément de cuisson est supporté de manière amovible à l'intérieur de la deuxième chambre de cuisson ; et dans lequel le deuxième élément de cuisson est agencé pour être supporté de manière amovible à l'intérieur de la première chambre de cuisson lorsque le premier élément de cuisson est retiré de la première chambre de cuisson et le deuxième élément de cuisson est retiré de la deuxième chambre de cuisson.

9. Appareil de cuisson (1300 ; 1400 ; 1500) selon la revendication 6 ou 8, comprenant en outre un troisième élément de cuisson qui inclut : un élément de cuisson électrique, un élément de cuisson à gaz, ou un bac ayant une chambre pour accueillir des charbons chauds ; dans lequel le troisième élément de cuisson est agencé pour être supporté de manière amovible à l'intérieur de la première chambre de cuisson lorsque le premier élément de cuisson est retiré de la première chambre de cuisson.

10. Appareil de cuisson (1300 ; 1400 ; 1500) selon l'une quelconque des revendications 1 à 9,
dans lequel les première et deuxième surfaces de cuisson sont agencées pour être chauffées indépendamment uniquement par les premier et deuxième éléments de cuisson respectifs.

11. Appareil de cuisson (1300 ; 1400 ; 1500) selon l'une quelconque des revendications 1 à 10,
dans lequel les première et deuxième surfaces de cuisson sont agencées pour chauffer simultanément les surfaces supérieure et inférieure d'un aliment par contact.

12. Appareil de cuisson (1300 ; 1400 ; 1500) selon l'une quelconque des revendications 1 à 11,
dans lequel l'appareil de cuisson est un appareil de cuisson à deux plaques opposées ou de type gril de contact.

13. Appareil de cuisson (1300 ; 1400 ; 1500) selon l'une quelconque des quelconques revendications 1 à 12,
dans lequel le premier module de cuisson peut servir de couvercle au deuxième module de cuisson.

14. Appareil de cuisson (1300 ; 1400 ; 1500) selon l'une quelconque des revendications 1 à 13,
dans lequel l'appareil de cuisson est un appareil de cuisson hybride intérieur-extérieur.
